# FASCICULE DE BREVET EUROPEEN

(11) **EP 2 494 232 B1**
(45) Date de publication et mention de la délivrance du brevet: **15.10.2014**
(21) Numéro de dépôt: 10787830.8
(22) Date de dépôt: 22.10.2010
(51) Int. Cl.: F16D 65/12

(54) **DISQUE DE FREIN FERROVIAIRE**
BREMSSCHEIBE FÜR SCHIENENFAHRZEUG
BRAKE DISC FOR RAILROAD VEHICLE

(30) Priorité: 28.10.2009 FR 0957581
(43) Date de publication de la demande: 05.09.2012
(73) Titulaire: Safe Metal, 69003 Lyon (FR)
(72) Inventeur: FLACHAT, Jacques, F-25420 Voujeaucourt (FR)
(74) Mandataire: Myon, Gérard Jean-Pierre
(86) Numéro de dépôt international: PCT/FR2010/052261
(87) Numéro de publication internationale: WO 2011/051603

(56) Documents cités:
- EP-A1- 0 427 489
- EP-A1- 2 360 386
- DE-B1- 2 936 668
- GB-A- 2 128 695

## Description

La présente invention concerne un disque de frein pour matériel roulant ferroviaire destiné à être rendu solidaire d'une roue à freiner, et à coopérer en freinage avec une garniture, constituée d'un matériau composite, montée sur une mâchoire mobile et susceptible d'être mise en contact avec le disque par l'intermédiaire de moyens de commande.

De tels disques sont destinés à tout matériel roulant ferroviaire, notamment train ou tramway.

Dans la plupart des cas, et plus particulièrement dans les trains à grande vitesse, ils sont montés de part et d'autre de la roue, pour une meilleure efficacité.

Il est généralement connu de réaliser de tels disques de manière monobloc, mais la très haute température de ceux-ci lors du freinage à grande vitesse (environ 900°), provoque la déformation des disques qui ont tendance à se déformer en formant un cône rentrant, ayant parfois pour conséquence d'être expulsé de la roue.

Les disques monobloc avaient également pour inconvénient de subir des déformations, non seulement en service, mais également lors de leur fabrication, du fait de leurs grandes dimensions, ce qui a pour effet néfaste de produire un voilage, et donc un mauvais équilibrage, dans le freinage.

Ceci a pour conséquence de provoquer une usure prématurée des garnitures qui ne viennent pas en contact avec une surface parfaitement plane.

On comprend bien que la sécurité était alors mise en question également.

Il a déjà été proposé de rigidifier les disques en créant des nervures radiales pour un meilleur contact avec le flanc de la roue, ceci dans le but également de créer des ailettes de refroidissement. De telles nervures radiales se sont révélées insuffisantes pour maîtriser les déformations dues à des chaleurs élevées, comme cité ci-dessus.

Un autre inconvénient des disques monobloc est leur poids très important, nécessitant l'intervention d'au moins deux opérateurs pour effectuer leur dépose et leur pose, voire des moyens de manutention et l'extraction de la roue.

GB-A-2 128 695 décrit un disque de frein comportant sur sa face interne, opposée à celle de freinage, des éléments de rigidification constitués par des nervures radiales. Avec une telle configuration, les déformations du disque dues à la chaleur de freinage ne sont pas maîtrisées de manière optimale.

La présente invention a pour but de remédier à l'ensemble des problèmes précités, tout en conservant l'interchangeabilité par rapport au matériel existant.

A cet effet, l'invention concerne un disque de frein pour matériel roulant ferroviaire destiné à être rendu solidaire d'une roue à freiner, et à coopérer en freinage avec une garniture, constituée d'un matériau composite, montée sur une mâchoire mobile et susceptible d'être mise en contact avec le disque par l'intermédiaire de moyens de commande, le disque comportant, sur sa face interne, opposée à celle de freinage, des éléments de rigidification constitués par des nervures, caractérisé en ce que les nervures sont dirigées, de manière régulière, en partie dans un sens radial et en partie dans un sens concentrique, par rapport à l'axe de la roue, les nervures radiales et les nervures concentriques étant reliées entre elles pour former une nervure continue, de forme globalement sinusoïdale, les rainures concentriques étant réalisées alternativement vers le haut et vers le bas du disque, de manière à maîtriser les déformations dudit disque dues à la chaleur de freinage.

Un autre but de l'invention est également de faciliter la manutention des disques, c'est pourquoi l'invention prévoit de les segmenter en au moins deux parties, et préférentiellement en trois parties identiques.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente en perspective, une vue vers l'extérieur d'une roue de train équipée d'un disque selon l'invention, sans garniture de freinage.
La figure 2 représente une vue vers l'extérieur, en plan, à échelle agrandie, d'une roue selon la figure 1, équipée de garniture de freinage.
La figure 3 est une vue en coupe, selon la ligne AA de la figure 2.

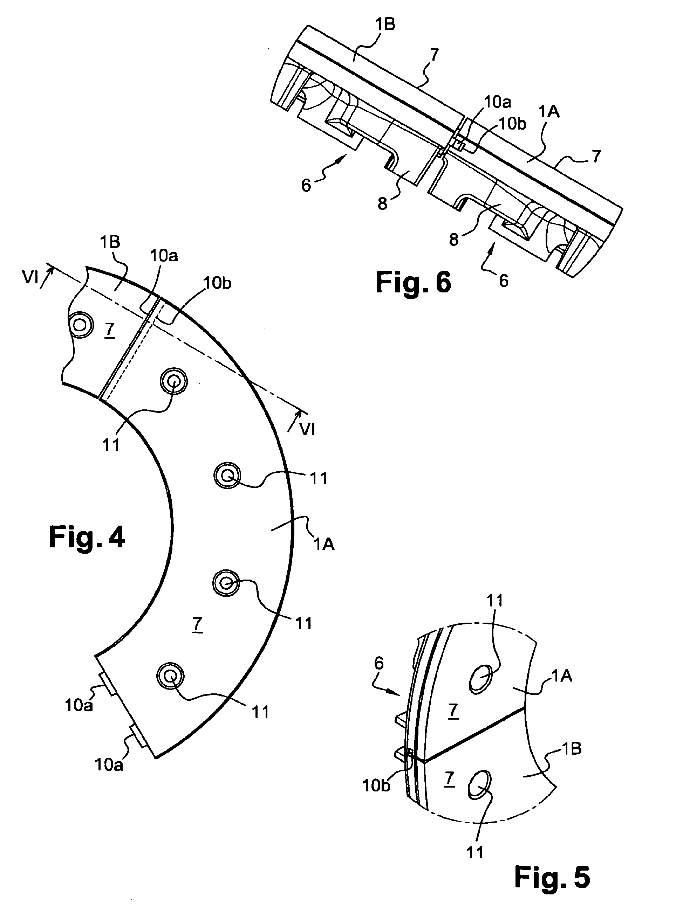

La figure 4 est une vue vers l'extérieur, en plan, à échelle agrandie, d'un secteur constituant une des parties du disque.
La figure 5 est une vue en perspective, vers l'extérieur, du point de raccordement entre deux segments du disque.
La figure 6 est une vue en coupe partielle selon la ligne VI-VI de la figure 4.

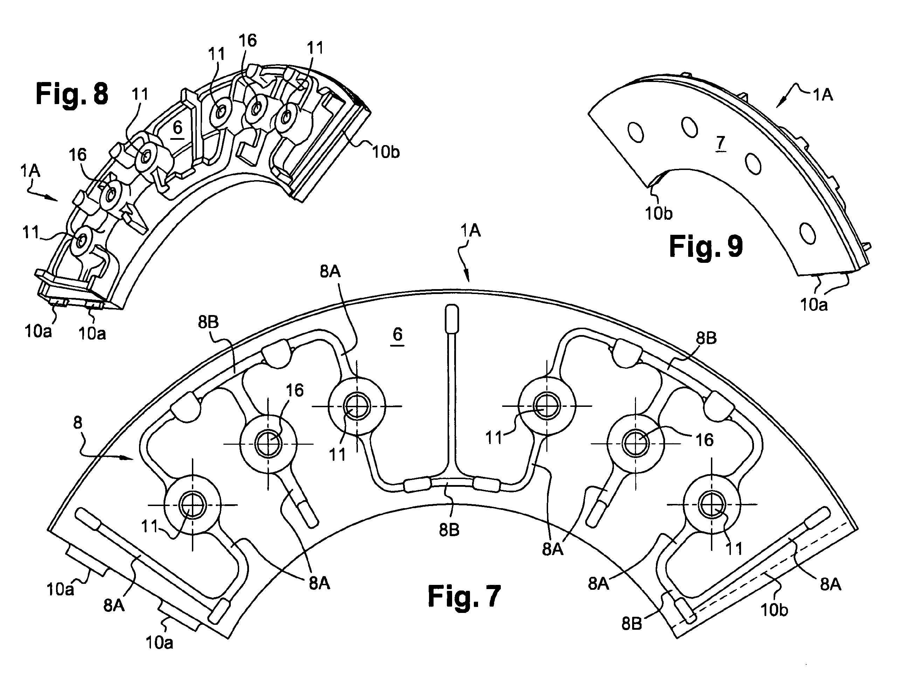

La figure 7 est une vue en plan, à échelle agrandie, d'un segment selon l'invention, constituant une partie du disque à réaliser, vu de l'intérieur, c'est-à-dire la partie dirigée vers la roue et en appui sur celle-ci.
La figure 8 est une vue en perspective, à plus petite échelle, du segment selon la figure 7, en vue interne.
La figure 9 est une vue en perspective, à plus petite échelle, du segment selon la figure 7, en vue externe.

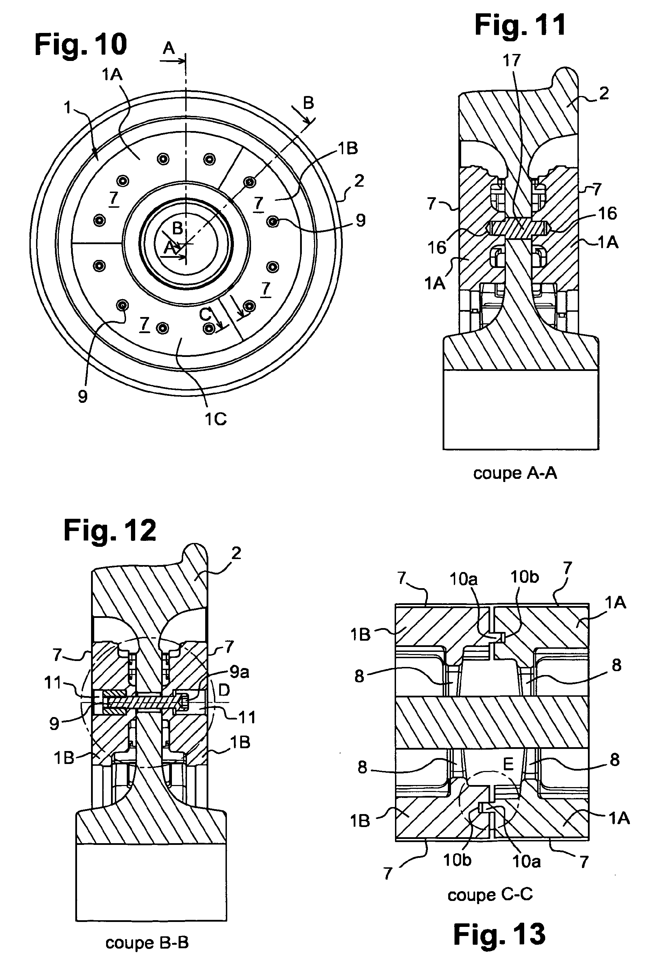

La figure 10 est une vue en plan de la roue équipée du disque selon l'invention, selon la figure 1.
La figure 11 est une vue en coupe selon la ligne AA de la figure 10.
La figure 12 est une vue en coupe selon la ligne BB de la figure 10.
La figure 13 est une vue en coupe selon la ligne CC de la figure 10.

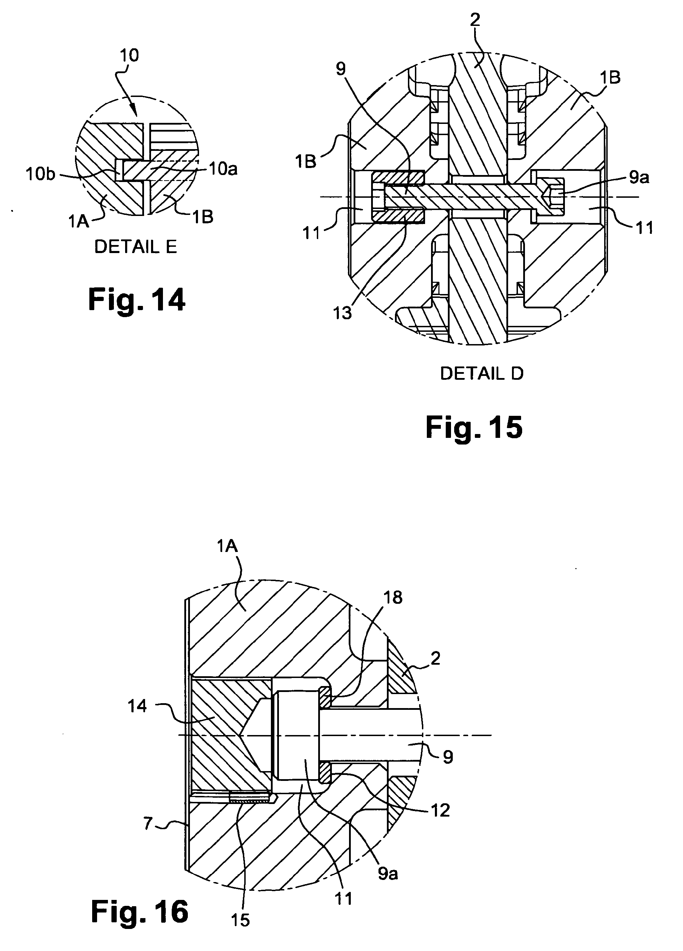

La figure 14 est une vue en coupe, à échelle agrandie, du détail E selon la figure 13, montrant la zone de raccordement de deux segments successifs.
La figure 15 est une vue en coupe du détail D selon la figure 12, à échelle agrandie.
La figure 16 est une vue en coupe à échelle agrandie montrant la tête d'une vis de fixation d'un segment équipé d'un bouchon d'obturation.

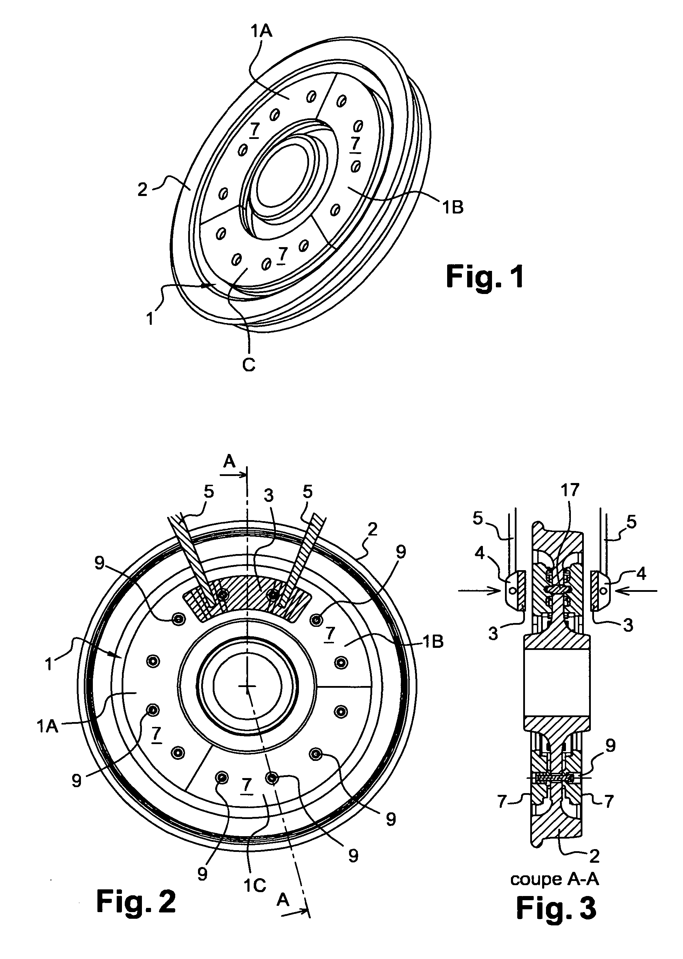

Comme particulièrement bien visible sur les figures 2 et 3, le disque de frein 1, globalement désigné sur les figures, est destiné à un matériel roulant ferroviaire. Il est destiné à être rendu solidaire d'une roue 2 à freiner, et à coopérer en freinage avec une garniture 3 constituée d'un matériau composite, montée sur une mâchoire mobile 4 susceptible d'être mise en contact avec le disque 1 par l'intermédiaire de moyens de commande 5.

Bien entendu, un disque 1 de freinage est disposé de part et d'autre de la roue 2, pour une meilleure efficacité et pour un meilleur équilibre de freinage.

Selon l'invention, le disque 1 comporte, sur sa face interne 6, opposée à celle de freinage 7, des éléments de rigidification constitués par des nervures 8 dirigées, de manière régulière, à la fois dans un sens radial et dans un sens concentrique, par rapport à l'axe de la roue 2, de manière à maîtriser les déformations dudit disque 1 dues à la chaleur de freinage.

Les nervures radiales 8A et les nervures concentriques 8B sont reliées entre elles pour former une nervure continue, de forme globalement sinusoïdale, les rainures concentriques étant réalisées alternativement vers le haut et vers le bas du disque.

Selon les caractéristiques qui précède, celles-ci pourraient être appliquées à un disque monobloc, mais il a été jugé avantageux que celui-ci soit constitué par au moins deux secteurs 1A, 1B, comportant à la fois des moyens individuels 9 de fixation sur la roue 2 et des moyens 10a, 10b de raccordement entre eux, disposés librement à leurs extrémités respectives, et coopérant, de par leurs formes complémentaires, sans pièce rapportée.

Les moyens de raccordement 10a, 10b d'au moins deux secteurs 1A, 1B entre eux, le composant, sont constitués par des parties mâles - femelles réalisées en vis-à-vis, aux extrémités de deux secteurs successifs 1A, 1B.

Selon le présente exemple de réalisation, les parties males - femelles de raccordement d'au moins deux secteurs successifs 1A, 1B sont constituées par des couples « tenon 10a - mortaise 10b », réalisés aux extrémités respectives desdits secteurs 1A, 1B, le long d'une ligne radiale.

En fait, la partie mâle ou tenon de l'une des extrémités d'un secteur 1A est formée par deux languettes 10a, globalement parallélépipédiques, destinées à s'emboîter dans une rainure correspondante 10b constituant la mortaise, réalisée sur toute la longueur de l'autre extrémité en vis-à-vis d'un secteur successif 1B.

Préférentiellement, et selon l'exemple de réalisation représenté, le disque 1 est constitué par trois secteurs 1A, 1B, 1C disposés à 120°.

Om pourrait également imaginer un disque formé de quatre secteurs.

L'ensemble des trois secteurs 1A, 1B, 1C est percé de douze trous 11 débouchants, à savoir quatre par secteur, répartis régulièrement de 30° en 30°, et destinés à coïncider avec des trous correspondants 11 de trois autres secteurs 1A, 1B, 1C disposés de l'autre côté de la roue 2, pour qu'ils puissent être traversés simultanément par autant de vis 9, dont les têtes 9a viennent en appui sur un épaulement interne 12 de chaque trou 11, et dont les extrémités filetées se vissent dans autant d'écrous 13 disposés au fond des trous 11 correspondants des autres secteurs opposés.

Selon une autre caractéristique de l'invention, les trous 11, au fond desquels sont logées les têtes de vis 9a, reçoivent un bouchon d'obturation 14, de manière à éviter le bruit dû aux effets de turbulence de l'air, en mouvement.

Le bouchon 14 est immobilisé par une goupille de blocage 15 insérée entre le bouchon 14 et la paroi du trou 11.

Par ailleurs, chacun des secteurs 1A, 1B, 1C le composant comporte deux logements borgnes internes 16 débouchant vers la roue 2. Ces logements borgnes sont réalisés entre chacun des trous débouchants 11 d'extrémités du secteur 1A, 1B, 1C et chacun des trous médians borgnes 16 du même secteur 1A, 1B, 1C. Chacun de ces trous borgnes 16, de chacun des secteurs, doit être monté de part et d'autre de la roue 2, et coopère avec les extrémités opposées de goujons 17 traversant la roue 2, de manière à permettre le centrage et le pré-montage de l'ensemble des secteurs 1A, 1B, 1C internes et externes constituant les disques 1 interne ou externe, avant mise en place des vis 9.

## Revendications

1. Disque de frein (1) pour matériel roulant ferroviaire destiné à être rendu solidaire d'une roue à freiner (2), et à coopérer en freinage avec une garniture (3), constituée d'un matériau composite, montée sur une mâchoire mobile (4) et susceptible d'être mise en contact avec le disque (1) par l'intermédiaire de moyens de commande (5), le disque (1) comportant, sur sa face interne (6), opposée à celle de freinage (7), des éléments de rigidification constitués par des nervures (8), **caractérisé en ce que** les nervures (8) sont dirigées, de manière régulière, en partie dans un sens radial et en partie dans un sens concentrique, par rapport à l'axe de la roue (2), les nervures radiales (8A) et les nervures concentriques (8B) étant reliées entre elles pour former une nervure continue, de forme globalement sinusoïdale, les rainures concentriques (8B) étant réalisées alternativement vers le haut et vers le bas du disque (1), de manière à maîtriser les déformations dudit disque (1) dues à la chaleur de freinage.

2. Disque selon la revendication 1, **caractérisé en ce qu'**il est constitué par au moins deux secteurs (1A, 1B), comportant à la fois des moyens individuels (9) de fixation sur la roue (2) et des moyens (10a, 10b) de raccordement entre eux, disposés librement à leurs extrémités respectives, et coopérant, de par leurs formes complémentaires, sans pièce rapportée.

3. Disque selon la revendication 2, **caractérisé en ce que** les moyens de raccordement (10a, 10b) d'au moins deux secteurs (1A, 1B) entre eux, le composant, sont constitués par des parties mâles - femelles réalisées en vis-à-vis, aux extrémités de deux secteurs successifs (1A, 1B).

4. Disque selon la revendication 3, **caractérisé en ce que** les parties males - femelles de raccordement d'au moins deux secteurs successifs (1A, 1B) sont constituées par des couples « tenon (10a) - mortaise (10b) », réalisés aux extrémités respectives desdits secteurs (1A, 1B), le long d'une ligne radiale.

5. Disque selon la revendication 4, **caractérisé en ce que** la partie mâle ou tenon de l'une des extrémités d'un secteur (1A) est formée par deux languettes (10a), globalement parallélépipédiques, destinées à s'emboîter dans une rainure correspondante (10b) constituant la mortaise, réalisée sur toute la longueur de l'autre extrémité en vis-à-vis d'un secteur successif (1B).

6. Disque selon l'une des revendications 2 à 5, **caractérisé en ce qu'**il est constitué par trois secteurs (1A, 1B, 1C) de 120°.

7. Disque selon la revendication 6, **caractérisé en ce que** l'ensemble des trois secteurs (1A, 1B, 1C) est percé de douze trous (11) débouchants, à savoir quatre par secteur, répartis régulièrement de 30° en 30°, et destinés à coïncider avec des trous correspondants (11) de trois autres secteurs (1A, 1B, 1C) disposés de l'autre côté de la roue (2), pour qu'ils puissent être traversés simultanément par autant de vis (9), dont les têtes (9a) viennent en appui sur un épaulement interne (12) de chaque trou (11), et dont les extrémités filetées se vissent dans autant d'écrous (13) disposés au fond des trous (11) correspondants des autres secteurs opposés.

8. Disque selon la revendication 7, **caractérisé en ce que** les trous (11), au fond desquels sont logées les têtes de vis (9a), reçoivent un bouchon d'obturation (14), de manière à éviter le bruit dû aux effets de turbulence de l'air, en mouvement.

9. Disque selon l'une des revendications 7 ou 8, **caractérisé en ce que** chacun des secteurs (1A, 1B, 1C) le composant comporte deux logements borgnes internes (16) débouchant vers la roue (2), ces logements borgnes étant réalisés entre chacun des trous débouchants (11) d'extrémités du secteur (1A, 1B, 1C) et chacun des trous médians borgnes (16) du même secteur (1A, 1B, 1C), chacun de ces trous borgnes (16), de chacun des secteurs devant être monté de part et d'autre de la roue (2), coopère avec les extrémités opposées de goujons (17) traversant la roue (2), de manière à permettre le centrage et le pré-montage de l'ensemble des secteurs (1A, 1B, 1C) internes et externes constituant les disques (1), avant mise en place des vis (9).

## Patentansprüche

1. Bremsscheibe (1) für rollendes Bahnmaterial, die vorgesehen ist, mit einem zu bremsenden Rad (2) verbunden zu werden und hinsichtlich der Bremsung mit einem Belag (3) zusammenzuarbeiten, der aus einem Verbundmaterial besteht und an einer beweglichen Bremsbacke (4) befestigt ist und geeignet ist, in Kontakt mit der Scheibe (1) über Steuermittel (5) gesetzt zu werden, wobei die Scheibe (1) auf ihrer Innenfläche (6), entgegengesetzt zu der der Bremsung (7), Verstärkungselemente umfasst, die durch Rippen (8) gebildet werden, **dadurch gekennzeichnet, dass** die Rippen (8) in regelmäßiger Weise teilweise in radialer Richtung und teilweise konzentrisch in Bezug auf die Achse des Rades (2) ausgerichtet sind, wobei die radialen Rippen (8A) und die konzentrischen Rippen (8B) untereinander verbunden sind, um eine kontinuierliche Rippe mit im Wesentlichen sinusförmiger Form zu bilden, wobei die konzentrischen Rippen (8B) abwechselnd nach oben und nach unten bezüglich der Scheibe (1) hergestellt sind, um die Deformationen der Scheibe (1) aufgrund der Bremswärme zu beherrschen.

2. Scheibe nach Anspruch 1, **dadurch gekennzeichnet, dass** sie aus mindestens zwei Sektoren (1A, 1B) besteht, die gleichzeitig individuelle Mittel (9) zur Befestigung an dem Rad (2) und Mittel (10a, 10b) zur Verbindung untereinander umfassen, die frei an ihren jeweiligen Enden angeordnet sind und durch ihre komplementären Formen ohne angesetzte Stücke zusammenzuarbeiten.

3. Scheibe nach Anspruch 2, **dadurch gekennzeichnet, dass** die Mittel (10a, 10b) zur Verbindung von mindestens zwei Sektoren (1A, 1B) untereinander, sie bildend, durch Einsteck-Aufnahmeteile gebildet werden, die an den Enden von zwei aufeinanderfolgenden Sektoren (1A, 1B) gegenüberliegend hergestellt sind.

4. Scheibe nach Anspruch 3, **dadurch gekennzeichnet, dass** die Einsteck-Aufnahmeteile zur Verbindung von mindestens zwei aufeinanderfolgenden Sektoren (1A, 1B) durch Paare "Zapfen (10a) -Zapfenausnehmung (10b)" gebildet sind, die an den jeweiligen Enden der Sektoren (1A, 1B) längs einer radialen Linie angeordnet sind.

5. Scheibe nach Anspruch 4, **dadurch gekennzeichnet, dass** das Einsteck- oder Zapfenteil eines der Enden eines Sektors (1A) durch zwei in ihrer Gesamtheit gesehen parallelepipedförmige Federn (10a) ausgebildet ist, die vorgesehen sind, in eine entsprechende Nut (10b) einzugreifen, die die Zapfenausnehmung bildet und die über die gesamte Länge des anderen Endes, gegenüberliegend zu einem darauffolgenden Sektor (1B) realisiert ist.

6. Scheibe nach einem der Ansprüche 2 bis 5, **dadurch gekennzeichnet, dass** sie aus drei Sektoren (1A, 1B, 1C) von 120° besteht.

7. Scheibe nach Anspruch 6, **dadurch gekennzeichnet, dass** die Gesamtheit der drei Sektoren (1A, 1B, 1C) mit zwölf Durchgangslöchern (11), das heißt, vier pro Sektor, durchbohrt sind und gleichmäßig von 30° zu 30° verteilt sind und vorgesehen sind, mit entsprechenden Löchern (11) von drei anderen Sektoren (1A, 1B, 1C) übereinzustimmen, die auf der anderen Seite des Rades (2) angeordnet sind, damit sie gleichzeitig von entsprechenden Schrauben (9) durchquert werden können, deren Köpfe (9a) in Auflage auf einer Innenschulter (12) jedes Lochs (11) kommen und deren Gewindeenden sich in ebenso viele Muttern (13) schrauben, die am Boden der korrespondierenden Löcher (11) der anderen gegenüberliegenden Sektoren angeordnet sind.

8. Scheibe nach Anspruch 7, **dadurch gekennzeichnet, dass** die Löcher (11), an deren Boden die Schraubenköpfe (9a) aufgenommen sind, einen Verschlussstopfen (14) empfangen, damit der bei der Bewegung aufgrund von Luftturbulenzeffekten entstehende Lärm vermieden wird.

9. Scheibe nach einem der Ansprüche 7 oder 8, **dadurch gekennzeichnet, dass** jeder der sie zusammensetzenden Sektoren (1A, 1B, 1C) zwei innere Sackaufnahmen umfasst, die zu dem Rad (2) münden, wobei diese Sackaufnahmen zwischen jedem der Durchgangslöcher (11) der Enden des Sektors (1A, 1B, 1C) und jedes der mittleren Sacklöcher (16) desselben Sektors (1A, 1B, 1C) realisiert sind, wobei jedes dieser Sacklöcher (16) von jedem der Sektoren, das beidseitig des Rades (2) montiert werden muss, mit den entgegengesetzten Enden von Bolzen (17), die das Rad (2) durchqueren, zusammenarbeitet, um die Zentrierung und die Vormontage der Anordnung der die Scheiben (1) bildenden inneren und äußeren Sektoren (1A, 1B, 1C) vor dem Einbringen der Schrauben (9) zu ermöglichen.

## Claims

1. Brake disc (1) for railway rolling stock, intended to be made integral with a brake wheel (2) and to cooperate in braking with a fitting (3) which is formed from a composite material, mounted on a moveable brake shoe (4) and able to come into contact with the disc (1) by means of control means (5), the disc (1), comprising on its internal face (6), opposite to that of the braking (7), stiffening elements formed by ribs (8), **characterised in that** the ribs (8) are directed, in a regular manner, in part in a radial direction an in part in a concentric direction, relative to the axis of the wheel (2), the radial ribs (8A) and the concentric ribs (8B) being connected to each other in order to form a continuous rib, of a globally sinusoidal shape, the concentric grooves (8B) being produced alternately towards the top and towards the bottom of the disc (1), in order to control the deformations of said disc (1) due to braking heat.

2. Disc according to claim 1, **characterised in that** it is formed by at least two sectors (1A, 1B), comprising at the same time individual means (9) for fixing on the wheel (2) an means (10a, 10b) for connection between each other, disposed freely at their respective ends and cooperating, by their complementary shapes, without a connecting part.

3. Disc according to claim 2, **characterised in that** connection means (10a, 10b) of at least two sectors (1A, 1B) by themselves, forming it, are formed by male-female parts produced opposite each other, at the ends of two successive sectors (1A, 1B).

4. Disc according to claim 3, **characterised in that** the male-female connection parts of at least two successive sectors (1A, 1B) are formed by "tenon (10a)-mortise (10b)" pairs, produced at the respective ends of said sectors (1A, 1B) along a radial line.

5. Disc according to claim 4, **characterised in that** the male part or tenon of one of the ends of a sector (1A) is formed by two tongues (10a), globally parallelepiped, intended to fit together in a corresponding groove (10b) forming the mortise, produced over the entire length of the other end opposite a successive sector (1B).

6. Disc according to one of the claims 2 to 5, **characterised in that** it is formed by three sectors (1A, 1B, 1C) of 120°.

7. Disc according to claim 6, **characterised in that** the entirety of the three sectors (1A, 1B, 1C) is pierced by twelve through-holes (11), i.e. four per sector, distributed regularly from 30° to 30°, and intende to coincide with corresponding holes (11) of three other sectors (1A, 1B, 1C) which are disposed on the other side of the wheel (2), so that they can be traversed simultaneously by as many screws (9), the heads (9a) of which come to abut on an internal shoulder (12) of each hole (11), and the threaded ends of which are screwed into as many nuts (13) which are disposed at the bottom of the corresponding holes (11) of the other opposite sectors.

8. Disc according to claim 7, **characterised in that** the holes (11), at the bottom of which the screw heads (9a) are housed, receive a sealing plug (14) in order to avoid noise due to the effects of air turbulence during movement.

9. Disc according to one of the claims 7 or 8, **characterised in that** each of the sectors (1A, 1B, 1C) forming it comprise two internal recessed housings (16) which open towards the wheel (2), these recessed housings being produced between each of the through-holes (11) of the ends of the sector (1A, 1B, 1C) and each of the recessed middle holes (16) of the same sector (1A, 1B, 1C), each of these recessed holes (16), of each of the sectors requiring to be mounted on both sides of the wheel (2), cooperates with the opposite ends of pins (17) traversing the wheel (2) in order to allow centring and pre-assembly of the entirety of the internal and external sectors (1A, 1B, 1C) forming the discs (1), before positioning the screws (9).
